# EUROPEAN PATENT SPECIFICATION

(11) **EP 3 165 584 B1**
(45) Date of publication and mention of the grant of the patent: **10.03.2021**
(21) Application number: 15814778.5
(22) Date of filing: 17.06.2015
(51) Int. Cl.: C09K 3/10, C08F 2/44, C08F 220/30, C09J 4/02, C09J 4/06, C09J 11/06, C09J 133/06, F16B 33/06, C08G 18/78, C09D 175/16

(54) **POLYMERIZABLE SEALING COMPOSITION**
POLYMERISIERBARE DICHTUNGSZUSAMMENSETZUNG
COMPOSITION D'ÉTANCHÉITÉ POLYMÉRISABLE

(30) Priority: 04.07.2014 JP 2014138266
(43) Date of publication of application: 10.05.2017
(73) Proprietor: Threebond Co., Ltd., Hachioji-shi Tokyo 192-0398 (JP)
(72) Inventor: KANAZAWA, Hidenori, Hachioji-shi Tokyo 1920398 (JP); KAMATA, Kunihiko, Hachioji-shi Tokyo 1920398 (JP); ONODA, Tomohiro, Hachioji-shi Tokyo 1920398 (JP)
(74) Representative: Lederer & Keller Patentanwälte Partnerschaft mbB
(86) International application number: PCT/JP2015/067526
(87) International publication number: WO 2016/002525

(56) References cited:
- EP-A1- 3 050 903
- JP-A- H0 517 723
- JP-A- H0 742 719
- JP-A- H01 108 284
- JP-A- H05 140 514
- JP-A- H05 186 751
- JP-A- H07 331 187
- JP-A- H10 130 587
- JP-A- S58 125 772

## Description

### Technical Field

The present invention relates to a composition that includes microcapsules, and is designed so that a polymerizable component included in each microcapsule is polymerized upon breakage of the microcapsule to form a coating film that exhibits high adhesion. In particular, the invention relates to a polymerizable sealing composition that exhibits a locking effect (loosening prevention effect) and a high immobilization effect when applied in advance to the threaded surface of a threaded member (e.g., screw, bolt, and nut), and can reduce the production of shaved powder, shavings, and the like when the threaded member is tightened.

### Background Art

A composition has been known that is applied to the threaded surface of a threaded member (e.g., screw, bolt, and nut) in order to achieve a locking effect (i.e., a loosening prevention effect) and a leakage prevention effect. For example, Patent Document 1 discloses a composition that includes a polyamide resin (binder), molybdenum disulfide, and boron nitride, and is used to prevent the loosening of a screw. The composition disclosed in Patent Document 1 exhibits the locking effect through the repulsion force of the resin component when the threaded member is tightened. However, since the locking effect is easily lost when a load (e.g., heat, vapor, chemical, or excessive stress) is been applied to the threaded member, it is difficult to use the composition disclosed in Patent Document 1 in a severe usage environment.

In order to solve the above problem, Patent Document 2 discloses an aqueous curable composition that aims to prevent the occurrence of loosening, and includes a polyacetal resin (binder), microcapsules that include an epoxy resin, and an amine-based curing agent. The composition disclosed in Patent Document 2 is designed so that a chemical reaction occurs upon breakage of the microcapsules, and the epoxy resin is cross-linked, and adheres to the threaded member to achieve a locking effect. Such a composition achieves a tightening strength that can endure a severe usage environment as compared with a composition that does not undergo a chemical reaction. However, such a composition has a problem in that the capsule shell produces shaved powder, shavings and the like (hereinafter may be referred to as "shaved powder and the like") due to breakage of the microcapsules when the threaded member is tightened. In particular, when the composition that includes the microcapsules is an aqueous composition, it is necessary to provide a capsule shell that exhibits high water resistance. Since it is necessary to increase the thickness of the capsule shell in order to produce such a capsule shell, the amount of chip and the like produced increases.

### Citation List

### Patent Documents

[Patent Document 1] JP-A-57-018808
[Patent Document 2] JP-A-05-140514

### Summary of the Invention

### Problem to be Solved by the Invention

As described above, when a composition that is applied to a threaded member and exhibits a locking effect is an aqueous composition that has a low impact on the environment, it is difficult to improve the locking performance while reducing the production of shaved powder and the like.

### Means for Solving the Problem

The invention was conceived in order to solve the above problem. The invention implements excellent locking performance using an aqueous composition while reducing the production of shaved powder and the like by providing the following polymerizable sealing composition.

The polymerizable sealing composition includes:
(1) microcapsules that include a component (a) and a component (b),
   the component (a) being a compound that has a bisphenol skeleton, and includes one or more (meth)acrylic groups in the molecule, and
   the component (b) being a compound that has a molecular weight of 300 or less, includes one or more (meth)acryloyloxy groups bonded directly to an aliphatic chain, and does not include an epoxy group, the microcapsules including the component (b) in a ratio of 50 to 150 parts by mass based on 100 parts by mass of the component (a);
(2) a binder component that includes a polymer including an acrylic ester as a constituent monomer, the polymerizable sealing composition including the binder component (2) in a ratio of 1 to 75 parts by mass based on 100 parts by mass of the microcapsules (1);
(3) an element that is present outside the microcapsules (1) and that cures the component (a) and the component (b); and
(4) water.

The invention also includes the following embodiments. According to a second embodiment, the polymerizable sealing composition is characterized in that the microcapsules (1) have a shell that has been formed by a reaction between an isocyanate compound and a melamine-formaldehyde primary condensate.

According to a third embodiment, the polymerizable sealing composition is characterized in that the component (b) included in the microcapsules (1) is a compound having a structure in which a (meth)acryloyloxy group is situated at each terminal of a linear alkylene having 10 or less carbon atoms.

According to a fourth embodiment, the polymerizable sealing composition is characterized in that the element (3) includes a component that is included in a microcapsule.

According to a fifth embodiment, the polymerizable sealing composition is characterized in that the component that is included in the microcapsule includes a peroxide. According to a sixth embodiment, the polymerizable sealing composition further includes (5) a silica fine powder having a particle size of 1 µm or less.

According to a seventh embodiment, the polymerizable sealing composition is characterized in that the polymerizable sealing composition is used to tighten a threaded member.

According to an eighth embodiment, a member includes a coating film formed by applying the polymerizable sealing composition, and volatilizing a volatile component included in the polymerizable sealing composition.

According to a ninth embodiment, a threaded member is the member according to the eighth embodiment, wherein the coating film is formed on a threaded surface.

### Effect of the Invention

The polymerizable sealing composition according to the invention exhibits an excellent locking effect (loosening prevention effect) when applied to a threaded member (e.g., bolt, nut, nipple, plug, socket, and elbow), and makes it possible to provide a threaded member for which the production of shaved powder and the like (derived from microcapsules) when the threaded member is tightened, is reduced.

### Mode for Carrying out the Invention

The polymerizable sealing composition according to the invention exhibits preferable properties due to the above components. Each component is described in detail below.

Components included in microcapsules (1)
The microcapsules (1) according to the invention include at least the component (a) and the component (b).
Component (a): A compound that has a bisphenol skeleton, and includes one or more (meth)acrylic groups in the molecule
Component (b): A compound that has a molecular weight of 300 or less, includes one or more (meth)acryloyloxy groups bonded directly to an aliphatic chain, and does not include an epoxy group

The microcapsules include the component (b) in a ratio of 50 to 150 parts by mass based on 100 parts by mass of the component (a).

The component (a) is not particularly limited as long as the component (a) is a compound that has a bisphenol skeleton, and includes one or more (meth)acrylic groups in the molecule. The component (a) is used for the polymerizable sealing composition according to the invention as a major element that exhibits adhesion to a base. Specifically, when the microcapsule that includes the component (a) has been destroyed, the component (3) (described later) that is present outside the microcapsule chemically reacts with the component (a), and undergoes cross-linking, so that adhesion to a base is improved, and the cured product is provided with strength. Note that the term "(meth)acrylic" used herein includes "acrylic" and "methacrylic", and the term "(meth)acrylate" used herein includes "acrylate" and "methacrylate".

Specific examples of the component (a) include a diglycidyl ether having a bisphenol skeleton, a bisphenol-type epoxy acrylate obtained by reacting the carboxy group of (meth)acrylic acid with an epoxy resin to add a (meth)acrylic group through esterification of the glycidyl group situated at the molecular terminal of the epoxy resin, a bisphenol-type epoxy acrylate obtained by adding a (meth)acrylic group (as described above) to a compound obtained by polyaddition of bisphenol A to a diglycidyl ether having a bisphenol skeleton, and the like. Note that compounds having the above structure may be collectively referred to herein as "bisphenol-type epoxy acrylate". An oxyalkylene-modified bisphenol-type epoxy acrylate is preferable from the viewpoint of availability of commercially-available products, the effect on the properties of the cured product, and the like. In particular, an ethoxy-modified bisphenol-type epoxy acrylate may preferably be used. The molecular weight of the bisphenol-type epoxy acrylate is preferably 300 to 700 from the viewpoint of reactivity, the properties of the cured product, and the like. With regard to an ethoxy-modified bisphenol-type epoxy acrylate, it is particularly preferable that the number of ethoxy groups included in the molecule be about 1 to 5.

Examples of commercially-available products of the component (a) include EBECRYL 600 and EBECRYL 3700 (manufactured by Daicel-Allnex Ltd.); Epoxy Ester 3002M, Epoxy Ester 3002A, Epoxy Ester 3000MK, and Epoxy Ester 3000A(manufactured by Kyoeisha Chemical Co., Ltd.); BAEA-100, BAEM-100, BAEM-50, and BFEA-50 (manufactured by KSM Co., Ltd.); UNIDIC V-5500 and UNIDIC V-5502 (manufactured by DIC Corporation); A-B1206PE, ABE-300, A-BPE-10, A-BPE-20, A-BPE-30, A-BPE-4, A-BPP-3, BBPE-80N, BPE-100, BPE-200, BPE-500, BPE-900, and BPE-1300N(manufactured by Shin-Nakamura Chemical Co., Ltd.); and the like.

The component (b) is not particularly limited as long as the component (b) is a compound that has a molecular weight of 300 or less, includes one or more (meth)acryloyloxy groups bonded directly to an aliphatic chain, and does not include an epoxy group (hereinafter may be referred to as "aliphatic acrylic monomer"). The term "aliphatic chain" used herein refers to a chain-like aliphatic hydrocarbon structure that does not have a cyclic structure. The chain-like aliphatic hydrocarbon structure may include a side chain that is formed by an alkyl group having 5 or less carbon atoms. When the polymerizable sealing composition according to the invention is applied to a base (e.g., threaded member) and dried, the component (b) reduces the production of shaved powder and the like when the microcapsules are broken by tightening. The mechanism by which the production of shaved powder and the like is reduced when the component (b) is included in the microcapsules is not clear at present, but is conjectured to be as follows. Specifically, shaved powder and the like are produced when the shell material of the microcapsules included in the coating film that does not sufficiently adhere to the binder component is removed due to an external force caused by tightening. According to the invention, the binder component is incorporated in the shell material that forms the microcapsules, and the shell material and the bisphenol-type epoxy acrylate used as the component (a) interact with each other, so that the binder component is incorporated in the reaction system in an unremovable manner, thereby reducing the production of shaved powder and the like. When the binder component is incorporated in the shell material, it is considered that the strength of the shell of the microcapsules is improved, and the microcapsules exhibit improved water resistance.

Specific examples of the component (b) include a mono(meth)acrylate such as methyl (meth)acrylate, ethyl (meth)acrylate, n-propyl (meth)acrylate, i-propyl (meth)acrylate, n-butyl (meth)acrylate, t-butyl (meth)acrylate, isobutyl (meth)acrylate, and 2-ethylhexyl (meth)acrylate, a di(meth)acrylate such as 1,3-propanediol di(meth)acrylate, 1,3-butanediol di(meth)acrylate, 1,4-butanediol di(meth)acrylate, 1,5-pentanediol di(meth)acrylate, 1,6-hexanediol di(meth)acrylate, 1,7-heptanediol di(meth)acrylate, 1,8-octanediol di(meth)acrylate, 1,9-nonanediol di(meth)acrylate, 1,10-decanediol di(meth)acrylate, 2,2-dimethyl propanediol dimethacrylate, 3-methyl-1,5-pentanediol di(meth)acrylate, and 2-butyl-ethyl-1,3-propanediol di(meth)acrylate, and a tri(meth)acrylate such as trimethylolpropane triacrylate and pentaerythritol triacrylate. In the present invention, a di(meth)acrylate and a tri(meth)acrylate are preferable, a di(meth)acrylate that includes a (meth)acryloyloxy group at each terminal of an alkylene chain is more preferable, and a di(meth)acrylate that includes a (meth)acryloyloxy group at each terminal of an alkylene chain, wherein the number of carbon atoms of the alkylene is 3 to 10, is still more preferable, from the viewpoint of reactivity during a curing reaction, the effect on the properties of the cured product, and the like.

Examples of commercially-available products of the component (b) include Light Ester E, Light Ester NB, Light Ester IB, Light Ester TB, Light Ester EH, Isodecyl Methacrylate ID, Lauryl Methacrylate L, Light Acrylate IAA, and Light Acrylate L-A (manufactured by Kyoeisha Chemical Co., Ltd.); LA, AIB, TBA, NOAA, IOAA, and INAA, (manufactured by Osaka Organic Chemical Industry Ltd.); A-DOD-N, A-HD-N, A-NOD-N, NOD-N, HD-N, and NPG (manufactured by Shin-Nakamura Chemical Co., Ltd.); and the like.

The microcapsules include the component (b) in a ratio of 50 to 150 parts by mass based on 100 parts by mass of the component (a). If the ratio of the component (b) exceeds the above range, the reactivity of the curing component may increase to a large extent, and deterioration in storage stability may occur. Moreover, the hardness of the cured product may increase, and the cured coating film may become fragile, whereby sufficient fixing strength may not be obtained. If the ratio of the component (b) is less than the above range, it may be difficult to sufficiently reduce the production of shaved powder and the like.

The microcapsules that include at least the component (a) and the component (b) may be produced using a known method. For example, the microcapsules may be produced using an interfacial polymerization method, an in-situ polymerization method, an insolubilization precipitation method, a coacervation method, or the like. It is particularly preferable to use the in-situ polymerization method disclosed in JP-A-2000-15087, for example.

When producing the microcapsules using the in-situ polymerization method, a mixture that includes the component (a) (that is included in the microcapsules), the component (b) (that is included in the microcapsules), and an isocyanate compound, is prepared. A known substance may be used as the isocyanate compound. Examples of the isocyanate compound include 4,4'-methylenebiscyclohexyl isocyanate, toluylene diisocyanate, 2H-1,3,5-oxadiazine-2,4,6-(3H,5H)-trione-3,5-bis(6-isocyanatohex-1-yl), diphenylmethane diisocyanate, hexamethylene diisocyanate, tetramethylene diisocyanate, pentamethylene diisocyanate, an adduct of hexamethylene diisocyanate and trimethylolpropane, a biuret condensate of three molecules of hexamethylene diisocyanate, an adduct of tolylene diisocyanate and trimethylolpropane, an isocyanurate condensate of tolylene diisocyanate, an isocyanurate condensate of hexamethylene diisocyanate, an isocyanurate condensate of isophorone diisocyanate, an isocyanate prepolymer in which one of the isocyanate moieties of hexamethylene diisocyanate forms an isocyanurate body together with two molecules of tolylene diisocyanate, and the other isocyanate moiety forms an isocyanurate body together with two molecules of hexamethylene diisocyanate, 4,4'-methylenebis(cyclohexyl isocyanate), and trimethylhexamethylene diisocyanate. It is preferable to use an adduct of tolylene diisocyanate and trimethylolpropane, an isocyanurate condensate of tolylene diisocyanate, an isocyanurate condensate of hexamethylene diisocyanate, or an isocyanurate condensate of isophorone diisocyanate. A derivative of hexamethylene diisocyanate (particularly a biuret condensate of hexamethylene diisocyanate) may preferably be used as the isocyanate compound. The isocyanate compound is used in a ratio of about 1 to 30 parts by mass based on 100 parts by mass of the component (a) and the component (b) (that are included in the microcapsules) in total. If the isocyanate compound is used in a ratio greater than the above range, the reactivity of the curing component may decrease, and storage stability may deteriorate. If the isocyanate compound is used in a ratio less than the above range, the capsule shell may exhibit insufficient strength.

The mixture is mixed with an emulsifier in water with stirring. After appropriately adjusting the pH, the temperature, the stirring conditions, and the like of the resulting mixture, a melamine-formalin primary condensate is added to the mixture, and the resulting mixture is stirred to produce microcapsules that are formed of a shell material that includes the reaction product of the isocyanate compound and the melamine-formalin primary condensate as the main component. A styrene-maleic anhydride copolymer, an isobutylene-maleic anhydride copolymer, and the like are preferable as the emulsifier. The emulsifier is preferably added in a ratio of about 1 to 25 parts by mass based on 100 parts by mass of the component (a) (that is included in the microcapsules), the component (b) (that is included in the microcapsules), and the isocyanate compound in total.

Binder component (2) that includes a polymer including an acrylic ester as constituent monomer
The binder component according to the invention includes a polymer including an acrylic ester as a constituent monomer. An acrylic ester copolymer is preferable as the binder component. A known compound that is used as a binder component for an adhesive, a coating material, and the like may be used as long as the compound has the above configuration. Since the composition according to the invention is an aqueous composition, it is particularly preferable to use a compound that is water-soluble, water-dispersible, or water-suspendable (e.g., emulsion), or has been subjected to a water dispersion treatment in advance. Examples of commercially-available products of an aqueous binder component that includes a polymer including an acrylic ester as a constituent monomer include, but are not limited to, JURYMER AC-10S (mass average molecular weight: about 5, 000) and JURYMER AS-10SH (mass average molecular weight: about 1,000,000) (manufactured by Toagosei Co., Ltd.); ACRYSET ARL-468(mass average molecular weight: about 4,000) and ACRYSET ARL-460 (manufactured by Nippon Shokubai Co., Ltd.); Polysol AP-1761, Polysol AP-5595N, and Polysol AP-4690N (manufactured by Showa Denko K.K.); Newcoat SFK-1000A and Newcoat SFK-8000A (manufactured by Shin-Nakamura Chemical Co., Ltd.); Mowinyl 727, Mowinyl 7525, and Mowinyl 745(manufactured by Nippon Synthetic Chemical Industry Co., Ltd.); and the like.

The binder component (2) is used in a ratio of 1 to 75 parts by mass (on a solid basis), and preferably 5 to 50 parts by mass, based on 100 parts by mass of the microcapsules (1). If the binder component (2) is used in a ratio greater than the above range, a sufficient locking effect may not be obtained when the composition is applied to a threaded member. If the binder component (2) is used in a ratio less than the above range, adhesion to a base may decrease, and workability may deteriorate.

Element (3) that cures component (a) and component (b)
The element (3) that cures the component (a) and the component (b) is not particularly limited as long as the element (3) cures the component (a) and the component (b), and is not adversely affected by water. A known compound that is normally used to cure an acrylic functional group may be used as the element (3). For example, a material that is suitable for the desired reaction mode may be selected from a photo-radical initiator, a thermal radical initiator, an anaerobic curing agent, a Michael addition cross-linking agent, and the like. For example, when the polymerizable sealing composition according to the invention is used for a shadow area, it is preferable to use a material other than a photo-radical initiator. In particular, when the polymerizable sealing composition according to the invention is applied to the surface of a threaded member (e.g., metal screw), it is particularly preferable to use an anaerobic curing agent. Note that the element (3) may be hereinafter referred to as "curing agent component").

When the element (3) is an anaerobic curing agent, a curing element that is a combination of a known peroxide and a known curing accelerator may preferably be used. Examples of the peroxide include a hydroperoxide such as cumene hydroperoxide, t-butyl hydroperoxide, and p-menthane hydroperoxide, a diallyl peroxide such as dicumyl peroxide, t-butylcumyl peroxide, and di-t-butyl peroxide, a ketone peroxide such as methyl ethyl ketone peroxide, cyclohexane peroxide, and methylcyclohexane peroxide, a diacyl peroxide such as benzoyl peroxide, lauroyl peroxide, and acetyl peroxide, a peroxy ester such as t-butylperoxy benzoate, t-butylperoxy acetate, and t-butylperoxy benzoate, and the like. Among these, a diacyl peroxide is preferable, and benzoyl peroxide is particularly preferable from the viewpoint of reactivity and availability.

A combination of o-benzoic sulfimide (saccharin) and a compound selected from an amine compound, a mercaptan compound, a hydrazine compound, a transition metal-containing compound, and the like, is known as a curing accelerator used for an anaerobic curing system. Specific examples of the amine compound include a heterocyclic secondary amine such as 2-ethylhexylamine, 1,2,3,4-tetrahydroquinoline, and 1,2,3,4-tetrahydroquinaldine,
a heterocyclic tertiary amine such as quinoline, methylquinoline, quinaldine, quinoxaline, and phenazine, an aromatic tertiary amine such as N,N-dimethyl-p-toluidine, N,N-dimethylanisidine, and N,N-dimethylaniline, an azole-based compound such as 1,2,4-triazole, oxazole, oxadiazole, thiadiazole, benzotriazole, hydroxybenzotriazole, benzoxazole, 1,2,3-benzothiadiazole, and 3-mercaptobenzotriazole, and the like. Specific examples of the mercaptan compound include a linear mercaptan such as n-dodecylmercaptan, ethylmercaptan, and butylmercaptan. Examples of the hydrazine compound include 1-acetyl-2-phenylhydrazine, 1-acetyl-2(p-tolyl)hydrazine, 1-benzoyl-2-phenylhydrazine, 1-(1',1',1'-trifluoro)acetyl-2-phenylhydrazine, 1,5-diphenylcarbohydrazine, 1-formyl-2-phenylhydrazine, 1-acetyl-2-(p-bromophenyl)hydrazine, 1-acetyl-2-(p-nitrophenyl)hydrazine, 1-acetyl-2-(2'-phenylethylhydrazine), ethyl carbamate, p-nitrophenylhydrazine, p-trisulfonyl hydrazide, and the like. A metal chelate complex salt is preferably used as the transition metal-containing compound. Examples of the transition metal-containing compound include iron pentanedionate, cobalt pentanedionate, copper pentanedionate, propylenediamine copper, ethylenediamine copper, iron naphthate, nickel naphthate, cobalt naphthate, copper naphthate, copper octate, iron hexoate, iron propionate, acetylacetone vanadium, and the like. These curing accelerators may be used either alone or in combination. It is preferable to use a mixture that includes a hydrazine compound, an amine compound, and a transition metal-containing compound since an excellent curing acceleration effect can be obtained.

The element (3) is preferably used in a ratio of about 0.1 to 45 parts by mass based on 100 parts by mass of the component (a) and the component (b) (that are included in the microcapsules) in total. If the element (3) is used in a ratio greater than the above range, a sufficient locking effect may not be obtained when the composition has been applied to a threaded member. If the element (3) is used in a ratio less than the above range, adhesion to a base may decrease, and workability may deteriorate. When the element (3) is a peroxide, the element (3) is preferably used in a ratio of about 1 to 25 parts by mass based on 100 parts by mass of the component (a) and the component (b) in total from the viewpoint of the balance between reactivity and the properties of the cured product.

It is preferable that the element (3) include a curing agent component that is included in a microcapsule. More specifically, it is particularly preferable to use the peroxide that is included in a microcapsule as the curing agent component. In this case, the curing accelerator that is used in combination with the peroxide may be included in a microcapsule, or may not be included in a microcapsule. The microcapsule that includes the peroxide may be produced using a known technique. For example, the microcapsule that includes the peroxide may be produced using an interfacial polymerization method, an in-situ polymerization method, an insolubilization precipitation method, a coacervation method, or the like. It is particularly preferable to use a microcapsule produced using an in-situ polymerization method.

The microcapsule may be produced using a known method such as that disclosed in JP-A-04-048926, JP-A-53-84881, JP-B-52-18671, JP-B-44-27257, or the like. A wall material for forming the microcapsule may be appropriately selected from a urea-formaldehyde resin, a melamine-formaldehyde resin, a polyurea resin, a polyurethane resin, and the like taking account of the object.

The polymerizable sealing composition according to the invention may further include the silica fine powder (5) having a particle size of 1 µm or less in addition to the components (1) to (4). The silica fine powder (5) is added to prevent galling during tightening when the polymerizable sealing composition according to the invention is applied to a threaded member. When the particle size of the silica fine powder is within the above range, production of shaved powder and the like rarely occurs during tightening, smooth screwing can be achieved, and moderate resistance is obtained so that galling rarely occurs.

The silica fine powder is not particularly limited with regard to the production method and the like as long as the silica fine powder has a particle size within the above range. Fumed silica or amorphous silica may be used as the silica fine powder. The surface of the silica fine powder may be modified with a fatty acid or the like. A mixture of silica fine powders that differ in particle size may also be used. The silica fine powder that may suitably be used in connection with the invention may be appropriately selected from fumed silica (e.g., AEROSIL 50, AEROSIL 90G, AEROSIL 130, AEROSIL 200, AEROSIL 200V, AEROSIL 200CF, AEROSIL FAD, AEROSIL 300, AEROSIL 300CF, AEROSIL 380, AEROSIL R972, AEROSIL R972V, AEROSIL R972CF, AEROSIL R202, AEROSIL R805, and AEROSIL R812 (manufactured by Nippon Aerosil Co., Ltd.); and REOLOSIL (manufactured by Tokuyama Corporation)), and amorphous silica (e.g., Nipsil (manufactured by Tosoh Silica Corporation); Sylysia and Sylophobic (manufactured by Fuji Silysia Chemical, Ltd.); and Carplex and SIPERNAT (manufactured by DSL. Japan Co., Ltd.)) taking account of the object.

The polymerizable sealing composition according to the invention may include a further additive (e.g., filler, rust preventive, surfactant, plasticizer, dispersant, curing accelerator, adhesion improver, preservative, defoamer, wetting agent, colorant, emulsifier, diluent, pH-adjusting agent, viscoelasticity modifier, and rheology modifier) as long as the advantageous effects of the invention are not impaired. In particular, when the polymerizable sealing composition according to the invention is applied to a threaded member, the locking effect after tightening can be further improved by utilizing an appropriate filler and an appropriate viscoelasticity modifier in combination.

The advantageous effects of the invention are described in detail below by way of examples. Note that the invention is not limited to the following examples.

### Examples

The materials listed below were used as the components included in the polymerizable sealing composition according to the invention that was evaluated in connection with the examples. Each composition was prepared according to the compositional ratio listed in Tables 1 and 2. Note that each numerical value listed in Tables 1 and 2 refers to the mass ratio of each component.

The materials listed below were used as the component (a) included in the microcapsules (1) according to the invention, and a comparative component. The material (a-1) was used as the component (a). The material (a'-1) or (a'-2) was used as the comparative component.
(a-1): BPE-80N manufactured by Shin-Nakamura Chemical Co., Ltd., ethoxy-modified (2.3) bisphenol A-type of epoxy dimethacrylate, molecular weight: about 452
(a'-1): U-4HA manufactured by Shin-Nakamura Chemical Co., Ltd., tetrafunctional urethane (meth)acrylate, molecular weight: about 600
(a'-2): A-DCP manufactured by Shin-Nakamura Chemical Co., Ltd., tricyclodecanedimethanol diacrylate, molecular weight: about 304

The materials listed below were used as the component (b) included in the microcapsules (1) according to the invention, and a comparative component. The material (b-1) was used as the component (b). The material (b'-1), (b'-2), (b'-3), or (b'-4) was used as the comparative component.
(b-1): Light Acrylate 1.6HX-A manufactured by Kyoeisha Chemical Co., Ltd., 1,6-hexanediol diacrylate, molecular weight: about 226
(b'-1): IBXA manufactured by Osaka Organic Chemical Industry, Ltd., isobornyl acrylate, molecular weight: about 208
(b'-2): BLEMMER G manufactured by NOF Corporation, glycidyl methacrylate, molecular weight: about 142
(b'-1): BPE-100 manufactured by Shin-Nakamura Chemical Co., Ltd., ethoxy-modified (2.6) bisphenol A-type of epoxy acrylate, molecular weight: about 478
(b'-4): CADURA E10P manufactured by Mitsubishi Chemical Corporation, glycidyl neodecanoate, molecular weight: about 228

The materials listed below were used as the binder component (2) according to the invention, and a comparative component. The material (2-1) was used as the binder component (2). The material (2'-1) was used as the comparative component.
(2-1): Newcoat SFK-1000A manufactured by Shin-Nakamura Chemical Co., Ltd., acrylic ester copolymer emulsion, solid content: about 45%, water content: about 55%
(2'-1): S-LEC KW-10 manufactured by Sekisui Chemical Co., Ltd., alkylacetalized polyvinyl alcohol aqueous solution, solid content: 25%, water content: about 75%, viscosity at 25°C: about 4,000 mPa·s

Microcapsules including a 70% benzoyl peroxide aqueous solution, and having a shell including a wall material consisting of a urea-resorcin-formaldehyde reaction product in a ratio of 10 mass%, were used as the curing agent component (3) according to the invention.

Ion-exchanged water was used as the water (4) according to the invention.

AEROSIL 200V (manufactured by Nippon Aerosil Co., Ltd., average particle size: about 12 nm, specific surface area: about 200 m²/g (BET method), hydrophilic fumed silica) was used as the silica fine powder (5) according to the invention having a particle size of 1 µm or less.

The materials were mixed with stirring as described below to prepare a polymerizable sealing composition.

### (Method for producing microcapsules (1))

The materials used as the component (a) and the component (b) (or the comparative components) were mixed in the mass ratio of examples and comparative examples listed in Table 1. After the addition of 10 parts by mass of a biuret-modified product of methylene diisocyanate ("Desmodur N3200" manufactured by Sumitomo Bayer Urethane Co., Ltd.) (microcapsule wall material) to 90 parts by mass of the mixture, the resulting mixture was stirred (mixed). The mixture was added to a 10% isobutylene-maleic acid copolymer aqueous solution in a ratio of 50 parts by mass based on 100 parts by mass of the aqueous solution, and dispersed therein by means of mixing, and the dispersion was stirred under acidic conditions. After the dropwise addition of a 60% aqueous solution of a melamine-formaldehyde primary condensate ("NIKARESIN" manufactured by Nippon Carbide Industries Co., Inc.), the resulting mixture was stirred (mixed) to produce microcapsules (1) including the component (a) and the component (b).

### (Method for producing base liquid)

A liquid used as a base for dispersing the microcapsules produced as described above (hereinafter may be referred to as "base liquid") was produced as described below. The binder component (2) (20 parts by mass), saccharin (curing accelerator) (1.5 parts by mass), thiosalicylic acid (.3.5 parts by mass), the silica fine powder (5) (modifier) (0.2 parts by mass), and SN-THICKENER A-803 (rheology modifier) (0.5 parts by mass) were added to the ion-exchanged water (4) (dispersion medium). The mass of the ion-exchanged water was adjusted so that the base liquid was 100 parts by mass, and the mixture was stirred (mixed).

### (Method for producing polymerizable sealing composition)

The microcapsules (1) (including the component (a) and the component (b)) produced as described above (100 parts by mass) and the curing agent component (3) (10 parts by mass) were added to the base liquid (180 parts by mass), and the mixture was homogenously stirred (mixed) to produce a polymerizable sealing composition (hereinafter may be referred to as "composition") (that was evaluated in each example and comparative example).

### (Method for producing threaded member to which polymerizable sealing composition is applied)

The threaded surface of a hexagon head bolt (M10×P1.5) (made of SS41) conforming to JIS B 1180 was immersed in each composition. After washing only the end of the threaded surface with clean water, the bolt was allowed to stand at room temperature for 1 hour in a state in which the head of the bolt was situated on the upper side to remove unnecessary composition. The bolt was then allowed to stand in a thermostat bath at 80°C for 20 minutes to volatilize volatile components (dry the bolt) to obtain a bolt in which a coating film of the composition was formed on the threaded surface (hereinafter may be referred to as "bolt provided with a coating film").

The characteristics of the bolt provided with a coating film obtained as described above were evaluated using the test methods described below.

### (Fixing strength)

A plain washer (JIS B 1256-equivalent product, M10) was fitted to the bolt provided with a coating film, and a nut (nut made of SS41 conforming to JIS B 1181, M10) was tightened at a tightening torque of 30 N·m to induce breakage of the microcapsules and a curing reaction, and the bolt and the like were allowed to stand at room temperature for 24 hours to prepare a fixing strength evaluation specimen. The head of the bolt of the specimen was secured on a fasten force/clamp force tester ("NST-100NM" manufactured by Japan Instrumentation System Co., Ltd.), and the nut was rotated in the loosening direction. The torque (breakaway torque) at which the nut moved was measured, and evaluated as the fixing strength. The evaluation standard was as follows.
Good: The breakaway torque was 35 N·m or more.
Bad: The breakaway torque was less than 35 N·m.

### (Heat resistance)

A specimen was prepared in the same manner as the fixing strength evaluation specimen, and placed in a thermostat bath (100°C). The specimen was removed from the thermostat bath when 30 days had elapsed, and the fixing strength was measured to evaluate the heat resistance. The evaluation standard was as follows.
Good: The fixing strength was 80% or more with respect to the initial value.
Bad: The fixing strength was less than 80% with respect to the initial value.

### Production of chip and the like

The nut was removed from the specimen that had been subjected to the fixing strength evaluation test, and the threaded surface of the bolt and the nut of the specimen was observed visually to evaluate the production of shaved powder and the like. The evaluation standard was as follows.
Good: The apparent surface area of the coating film of the composition that remained on the threaded surface of the bolt was 90% or more with respect to the initial state, or the apparent surface area of the coating film of the composition that remained on the threaded surface of the nut was less than 10% with respect to the entire threaded surface.
Bad: The whole threaded surfaces of the bolt and nut were not in the above state.

Note that whether or not the apparent surface area of the coating film of the composition that remained on the threaded surface of the bolt was 90% or more with respect to the initial state, or and whether or not the apparent surface area of the coating film of the composition that remained on the threaded surface of the nut was less than 10% with respect to the entire threaded surface, were determined as described below. A reference specimen 1 in which the apparent surface area of the coating film of the composition that remained on the threaded surface of the bolt was 90% with respect to the initial state, and a reference specimen 2 in which the apparent surface area of the coating film of the composition that remained on the threaded surface of the nut was 10% with respect to the entire threaded surface, were provided. The reference specimens 1 and 2 were cut into two pieces in the threading axial direction of the bolt and the nut, and the threaded surfaces of the cut specimens 1 and 2 were photographed. Whether or not the apparent surface area of the coating film of the composition that remained on the threaded surface of the bolt was 90% or more with respect to the initial state, was determined by comparing the each examples and comparative examples with the photograph of the threaded surface of the reference specimen 1 in which the apparent surface area of the coating film of the composition that remained on the threaded surface of the bolt was 90% with respect to the initial state. Whether or not the apparent surface area of the coating film of the composition that remained on the threaded surface of the nut was less than 10% with respect to the entire threaded surface, was determined by comparing each examples and comparative examples with the photograph of the threaded surface of the reference specimen 2 in which the apparent surface area of the coating film of the composition that remained on the threaded surface of the nut was 10% with respect to the entire threaded surface.

### (Storage stability)

Each composition produced as described above was allowed to stand in a thermostat bath at 90°C for 4 hours. After allowing the composition to return to room temperature, the composition was stirred using a glass rod, and the presence or absence of precipitates (aggregates) was observed visually. The evaluation standard was as follows.
Good: Precipitates (aggregates) were not observed.
Bad: Precipitates (aggregates) were observed.

The properties of the composition produced using microcapsules that were produced while changing the types and the amounts of the component (a) and the component (b) were evaluated in order to determine the effects of the types and the compositional ratio of the component (a) and the component (b), and the like. The types and the mass ratio of the component (a), the component (b), and their comparative components included in each composition, and the evaluation results for the properties of each composition (Examples 1 to 3 and Comparative Examples 1 to 9) including the components are listed in Table 1. Note that the material (2-1) was used as the component (2) included in the base liquid used for each composition.

**[Table 1]**

| | | | Example | | | Comparative Example | | | | | | | | |
|---|---|---|---|---|---|---|---|---|---|---|---|---|---|---|
| | | | 1 | 2 | 3 | 1 | 2 | 3 | 4 | 5 | 6 | 7 | 8 | 9 |
| Mass ratio of components included in microcapsules | (a) | BPE-80N | 100 | 100 | 100 | 100 | 100 | 100 | 100 | 100 | | | | |
| | (a') | U-4HA | | | | | | | | | 100 | 100 | | |
| | | DCP-A | | | | | | | | | | | 100 | 100 |
| | (b) | 1.6HX | 100 | 70 | 120 | 30 | 200 | | | | 100 | | 100 | |
| | (b') | BLEMMER G | | | | | | | | | | 100 | | 100 |
| | | IBXA | | | | | | 100 | | | | | | |
| | | BPE-100 | | | | | | | 100 | | | | | |
| | | E10P | | | | | | | | 100 | | | | |
| Mass ratio in polymerizable sealing composition | (1) | Microcapsules | 100 | 100 | 100 | 100 | 100 | 100 | 100 | 100 | 100 | 100 | 100 | 100 |
| | (3) | Encapsulated benzoyl peroxide | 10 | 10 | 10 | 10 | 10 | 10 | 10 | 10 | 10 | 10 | 10 | 10 |
| | Base liquid | | 180 | 180 | 180 | 180 | 180 | 180 | 180 | 180 | 180 | 180 | 180 | 180 |
| Property evaluation results | Fixing strength | | Good | Good | Good | Good | Bad | Bad | Good | Bad | Bad | Bad | Bad | Bad |
| | Heat resistance | | Good | Good | Good | Good | Bad | Bad | Good | Bad | Bad | Bad | Bad | Bad |
| | Production of chip and the like | | Good | Good | Good | Bad | Good | Good | Bad | Good | Good | Good | Good | Good |
| | Storage stability | | Good | Good | Good | Good | Bad | Bad | Good | Good | Bad | Bad | Good | Good |

The properties of the composition produced using a base liquid that was produced while changing the type and the amount of the component (2) (binder component) were evaluated in order to determine the effects of the component (2). The type and the mass ratio (on a solid basis) (i.e., the mass ratio (parts by mass on a solid basis) based on 100 parts by mass of the microcapsules (1)) of the component (2) included in the base liquid used for each composition, and the evaluation results for the properties of each polymerizable sealing composition (Examples 1, 4, and 5, and Comparative Examples 10 to 12) including the component are listed in Table 2. Note that microcapsules having the composition of Example 1 were used as the microcapsules (1) included in each composition.

**[Table 2]**

| | | | Example | | | Comparative Example | | |
|---|---|---|---|---|---|---|---|---|
| | | | 1 | 4 | 5 | 10 | 11 | 12 |
| Binder component (wt%) included in base liquid | (2) | SFK-1000A | 8.8 | 4.4 | 17.6 | | 0.5 | 50 |
| | (2') | KW-10 | | | | 5 | | |
| Mass ratio in polymerizable sealing composition | (1) | Microcapsules | 100 | 100 | 100 | 100 | 100 | 100 |
| | (3) | Encapsulated benzoyl peroxide | 10 | 10 | 10 | 10 | 10 | 10 |
| | Base liquid | | 180 | 180 | 180 | 180 | 180 | 180 |
| Property evaluation results | | Fixing strength | Good | Good | Good | Bad | Bad | Bad |
| | | Heat resistance | Good | Good | Good | Good | Bad | Bad |
| | | Production of chip and the like | Good | Good | Good | Bad | Bad | Bad |
| | | Storage stability | Good | Good | Good | Good | Bad | Good |

The polymerizable sealing compositions that fall within the scope of the invention exhibited excellent screwing properties (see the examples). On the other hand, the polymerizable sealing compositions that fall outside the scope of the invention exhibited insufficient screwing properties. For example, when the ratio of the component (b) was less than a specific range, a large amount of chip and the like was produced (see Comparative Example 1). When the ratio of the component (b) exceeded a specific range, the basic properties such as fixing strength and heat resistance were insufficient. When a compound that does not have a specific chemical structure was used as the component (b), it was impossible to achieve fixing strength and heat resistance while reducing the production of shaved powder and the like (see Comparative Examples 3 to 6). When the ratio of the component (a) fell outside a specific range, or when a compound that does not have a specific chemical structure was used as the component (a), good screwing properties could not be obtained, and it was impossible to reduce the production of shaved powder and the like (see Comparative Examples 7 and 8).

### Industrial Applicability

The polymerizable sealing composition according to the invention is an aqueous composition that has a low impact on the usage environment, exhibits excellent screwing-sealing properties, and produces only a small amount of chip during tightening (screwing). The polymerizable sealing composition according to the invention is useful for preventing leakage of fluid (oil, fat, gas, and water) when applied to a member having a threaded part (e.g., bolt, nut, nipple, plug, socket, plug, and elbow).

## Claims

1. A polymerizable sealing composition comprising:
(1) microcapsules that include a component (a) and a component (b),
the component (a) being a compound that has a bisphenol skeleton, and comprises one or more (meth)acrylic groups in its molecule, and
the component (b) being a compound that has a molecular weight of 300 or less, comprises one or more (meth)acryloyloxy groups bonded directly to an aliphatic chain, and does not comprise an epoxy group, the microcapsules including the component (b) in a ratio of 50 to 150 parts by mass based on 100 parts by mass of the component (a);
(2) a binder component that comprises a polymer comprising an acrylic ester as a constituent monomer, the polymerizable sealing composition comprising the binder component (2) in a ratio of 1 to 75 parts by mass based on 100 parts by mass of the microcapsules (1);
(3) an element that is present outside the microcapsules (1) and that cures the component (a) and the component (b); and
(4) water.

2. The polymerizable sealing composition according to claim 1, wherein the microcapsules (1) have a shell that is formed by a reaction between an isocyanate compound and a melamine-formaldehyde primary condensate.

3. The polymerizable sealing composition according to claim 1 or 2, wherein the component (b) included in the microcapsules (1) is a compound having a structure in which a (meth)acryloyloxy group is situated at each terminal of a linear alkylene having 10 or less carbon atoms.

4. The polymerizable sealing composition according to any one of claims 1 to 3, wherein the element (3) comprises a component that is included in a microcapsule.

5. The polymerizable sealing composition according to any one of claims 1 to 4, wherein the component that is included in the microcapsule comprises a peroxide.

6. The polymerizable sealing composition according to any one of claims 1 to 5, further comprising:
(5) a silica fine powder having a particle size of 1 µm or less.

7. Use of the polymerizable sealing composition according to any one of claims 1 to 6 for tightening a threaded member.

8. A member comprising a coating film formed by applying the polymerizable sealing composition according to any one of claims 1 to 7 on the member, and volatilizing a volatile component included in the polymerizable sealing composition.

9. A threaded member that is the member according to claim 8, wherein the coating film is formed on a threaded surface.

## Patentansprüche

1. Polymerisierbare Dichtungszusammensetzung, umfassend:
(1) Mikrokapseln, die eine Komponente (a) und eine Komponente (b) enthalten, wobei Komponente (a) eine Verbindung ist, die eine Bisphenol-Hauptkette aufweist und eine oder mehrere (Meth)acrylgruppen in ihrem Molekül umfasst, und
wobei Komponente (b) eine Verbindung ist, die ein Molekulargewicht von 300 oder weniger hat, eine oder mehrere (Meth)acryloyloxygruppen umfasst, die direkt an eine aliphatische Kette gebunden sind, und keine Epoxidgruppe umfasst, wobei die Mikrokapseln die Komponente (b) in einem Verhältnis von 50 bis 150 Masseteilen, basierend auf 100 Masseteilen der Komponente (a), enthalten;
(2) eine Bindemittelkomponente, die ein Polymer umfasst, das einen Acrylsäureester als ein konstituierendes Monomer umfasst, wobei die polymerisierbare Dichtungszusammensetzung die Bindemittelkomponente (2) in einem Verhältnis von 1 bis 75 Masseteilen, basierend auf 100 Masseteilen der Mikrokapseln (1), umfasst;
(3) ein Element, das außerhalb der Mikrokapseln (1) vorliegt und die Komponente (a) und die Komponente (b) härtet; und
(4) Wasser.

2. Polymerisierbare Dichtungszusammensetzung nach Anspruch 1, wobei die Mikrokapseln (1) eine Hülle aufweisen, die durch Reaktion zwischen einer Isocyanatverbindung und einem primären Melamin-Formaldehyd-Kondensat gebildet wird.

3. Polymerisierbare Dichtungszusammensetzung nach Anspruch 1 oder 2, wobei die in den Mikrokapseln (1) enthaltene Komponente (b) eine Verbindung mit einer Struktur ist, in der sich eine (Meth)acryloyloxygruppe an jedem Ende eines linearen Alkylens mit 10 oder weniger Kohlenstoffatomen befindet.

4. Polymerisierbare Dichtungszusammensetzung nach einem der Ansprüche 1 bis 3, wobei das Element (3) eine Komponente umfasst, die in einer Mikrokapsel enthalten ist.

5. Polymerisierbare Dichtungszusammensetzung nach einem der Ansprüche 1 bis 4, wobei die Komponente, die in der Mikrokapsel enthalten ist, ein Peroxid umfasst.

6. Polymerisierbare Dichtungszusammensetzung nach einem der Ansprüche 1 bis 5, ferner umfassend:
(5) ein feines Siliciumdioxidpulver mit einer Teilchengröße von 1 µm oder weniger.

7. Verwendung der polymerisierbaren Dichtungszusammensetzung nach einem der Ansprüche 1 bis 6 zum Anziehen eines Gewindebauteils.

8. Bauteil, umfassend einen Beschichtungsfilm, gebildet durch Aufbringen der polymerisierbaren Dichtungszusammensetzung nach einem der Ansprüche 1 bis 7 auf das Bauteil und Verflüchtigen einer flüchtigen Komponente, die in der polymerisierbaren Dichtungszusammensetzung enthalten ist.

9. Gewindebauteil, das das Bauteil nach Anspruch 8 ist, wobei der Beschichtungsfilm auf einer Gewindeoberfläche gebildet wird.

## Revendications

1. Composition d'étanchéité polymérisable comprenant :
(1) des microcapsules qui comprennent un composant (a) et un composant (b), le composant (a) étant un composé qui a un squelette bisphénol et qui comprend un ou plusieurs groupes (méth)acryliques dans sa molécule, et
le composant (b) étant un composé qui a un poids moléculaire de 300 ou moins, comprend un ou plusieurs groupes (méth)acryloyloxy liés directement à une chaîne aliphatique, et ne comprend pas de groupe époxy, les microcapsules comprenant le composant (b) dans un rapport de 50 à 150 parties en masse pour 100 parties en masse du composant (a) ;
(2) un composant liant qui comprend un polymère comprenant un ester acrylique comme monomère constitutif, la composition d'étanchéité polymérisable comprenant le composant liant (2) dans un rapport de 1 à 75 parties en masse sur la base de 100 parties en masse des microcapsules (1) ;
(3) un élément qui est présent à l'extérieur des microcapsules (1) et qui durcit le composant (a) et le composant (b); et
(4) de l'eau.

2. Composition d'étanchéité polymérisable selon la revendication 1, dans laquelle les microcapsules (1) ont une enveloppe qui est formée par une réaction entre un composé isocyanate et un condensat primaire mélamine-formaldéhyde.

3. Composition d'étanchéité polymérisable selon la revendication 1 ou 2, dans laquelle le composant (b) inclus dans les microcapsules (1) est un composé ayant une structure dans laquelle un groupe (méth)acryloyloxy est situé à chaque extrémité d'un alkylène linéaire ayant 10 atomes de carbone ou moins.

4. Composition d'étanchéité polymérisable selon l'une quelconque des revendications 1 à 3,
où l'élément (3) comprend un composant qui est inclus dans une microcapsule.

5. Composition d'étanchéité polymérisable selon l'une quelconque des revendications 1 à 4,
dans laquelle le composant qui est inclus dans la microcapsule comprend un peroxyde.

6. Composition d'étanchéité polymérisable selon l'une quelconque des revendications 1 à 5, comprenant en outre :
(5) une poudre fine de silice ayant une taille de particule de 1 µm ou moins.

7. Utilisation de la composition d'étanchéité polymérisable selon l'une quelconque des revendications 1 à 6 pour serrer un élément fileté.

8. Élément comprenant un film de revêtement formé en appliquant la composition d'étanchéité polymérisable selon l'une quelconque des revendications 1 à 7 sur l'élément, et en volatilisant un composant volatil inclus dans la composition d'étanchéité polymérisable.

9. Élément fileté qui est l'élément selon la revendication 8, dans lequel le film de revêtement est formé sur une surface filetée.
